# EUROPEAN PATENT APPLICATION

(11) **EP 4 694 401 A1**
(43) Date of publication of application: **11.02.2026**
(21) Application number: 23944675.0
(22) Date of filing: 12.07.2023
(51) Int. Cl.: H04W 56/00

(54) **COMMUNICATION METHOD AND APPARATUS, AND DEVICE, CHIP, STORAGE MEDIUM, PRODUCT AND PROGRAM**

(71) Applicant: GUANGDONG OPPO MOBILE TELECOMMUNICATIONS CORP., LTD., Dongguan, Guangdong 523860 (CN)
(72) Inventor: LI, Haitao, Dongguan, Guangdong 523860 (CN); HU, Yi, Dongguan, Guangdong 523860 (CN)
(74) Representative: Penza, Giancarlo
(86) International application number: PCT/CN2023/106973
(87) International publication number: WO 2025/010655

(57) **Abstract**

Disclosed in the present application are a communication method and apparatus, and a device, a chip, a storage medium, a product and a program. The method comprises: an access network device synchronously receiving a first paging message and first data from a core network element, wherein the first paging message is used to page a terminal device which waits for receiving the first data; and the access network device synchronously receiving the first paging message and the first data from the core network element comprises: the time interval between a time domain in which the access network device receives the first paging message and a time domain in which the access network device receives the first data is less than a first threshold.

## Description

### TECHNICAL FIELD

Embodiments of the present application relate to the technical field of communications, and specifically to a communication method and apparatus, a device, a chip, a storage medium, a product, and a program.

### BACKGROUND

Data and/or signaling transmission is typically performed between Non-Terrestrial Networks (NTNs) and terminal devices using satellite communication. Compared to terrestrial cellular network communication, satellite communication has advantages such as not being restricted by user geographical locations, offering long-distance communication with lower cost, and providing higher communication stability.

In the related art, a satellite receives mobile terminated-data (MT-data) from a core network element only after receiving a response message for a Paging message from a terminal device and forwarding the response message for the Paging message to the core network element, which greatly increases transmission waiting latency for the satellite to forward the MT-data to the terminal device.

### SUMMARY

Embodiments of the present application provide a communication method and apparatus, a device, a chip, a storage medium, a product, and a program.

In a first aspect, an embodiment of the present application provides a communication method, which includes the following operation.

An access network device synchronously receives a first paging message and first data from a core network element, the first paging message being used to page a terminal device that is to receive the first data.

Herein, the access network device synchronously receiving the first paging message and the first data from the core network element is implemented by:

a time interval between a time domain in which the access network device receives the first paging message and a time domain in which the access network device receives the first data being less than a first threshold.

In a second aspect, an embodiment of the present application provides a communication method, which includes the following operation.

A core network synchronously transmits a first paging message and first data to an access network device, the first paging message being used to page a terminal device that is to receive the first data.

Herein, the core network synchronously transmitting the first paging message and the first data to the access network device is implemented by:

a time interval between a time domain in which the core network element transmits the first paging message and a time domain in which the core network element transmits the first data being less than a second threshold.

In a third aspect, an embodiment of the present application provides a communication method, which includes the following operations.

A terminal device receives a second paging message from an access network device, the second paging message being used to page, within the network coverage of the access network device, the terminal device that is to receive first data, where the access network device caches the first data.

When the terminal device acknowledges that the first data is to be received or has not acknowledged that the first data is not to be received, the terminal device transmits first information to the access network device, where the first information indicates that the terminal device acknowledges that the first data is to be received or has not acknowledged that the first data is not to be received.

The terminal device receives the first data from the access network device.

In a fourth aspect, an embodiment of the present application provides a communication apparatus, which includes a first receiving unit.

The first receiving unit is configured to synchronously receive a first paging message and first data from a core network element, the first paging message being used to page a terminal device that is to receive the first data.

A time interval between a time domain in which the apparatus receives the first paging message and a time domain in which the apparatus receives the first data is less than a first threshold.

In a fifth aspect, an embodiment of the present application provides a communication apparatus, which includes a second transmitting unit.

The second transmitting unit is configured to synchronously transmit a first paging message and first data to an access network device, the first paging message being used to page a terminal device that is to receive the first data.

A time interval between a time domain in which the apparatus transmits the first paging message and a time domain in which the apparatus transmits the first data is less than a second threshold.

In a sixth aspect, an embodiment of the present application provides a communication apparatus, which includes a third transmitting unit and a third receiving unit.

The third receiving unit is configured to receive a second paging message from an access network device, the second paging message being used to page, within the network coverage of the access network device, the communication apparatus that is to receive first data, and the access network device caching the first data.

The third transmitting unit is configured to transmit first information to the access network device when the communication apparatus acknowledges that the first data is to be received or has not acknowledged that the first data is not to be received, where the first information indicates that the communication apparatus acknowledges that the first data is to be received or has not acknowledged that the first data is not to be received.

The third receiving unit is further configured to receive the first data from the access network device.

In a seventh aspect, an embodiment of the present application provides a communication device including a processor and a memory. The memory is configured to store a computer program, and the processor is configured to invoke and run the computer program stored in the memory to perform the communication method in any one of the described first to third aspects.

In an eighth aspect, an embodiment of the present application provides a chip configured to implement the communication method in any one of the described first to third aspects.

Specifically, the chip includes: a processor, configured to invoke and run a computer program from a memory, so that a device on which the chip is installed to perform the communication method in any one of the described first to third aspects.

In a ninth aspect, an embodiment of the present application provides a computer-readable storage medium storing a computer program that, when executed by at least one processor, implements the communication method in any one of the described first to third aspects.

In a tenth aspect, an embodiment of the present application provides a computer program product including computer program instructions that cause a computer to execute the communication method in any one of the described first to third aspects.

In an eleventh aspect, an embodiment of the present application provides a computer program that, when running on a computer, causes the computer to perform the communication method in any one of the described first to third aspects.

Embodiments of the present application provide a communication method and apparatus, a device, a chip, a storage medium, a product, and a program. The method may include that: an access network device (e.g. a satellite) synchronously receives a first paging message and first data from a core network element, the first paging message being used to page a terminal device that is to receive the first data, where a time interval between a time domain in which the access network device receives the first paging message and a time domain in which the access network device receives the first data is less than a first threshold. In this way, the access network device may synchronously receive the first paging message and the first data from the core network element, such that after learning that the terminal device acknowledges that the first data is to be received or has not acknowledged that the first data is not to be received, the access network device may timely transmit the first data to the terminal device, thereby shortening the transmission waiting latency.

### BRIEF DESCRIPTION OF THE DRAWINGS

The drawings illustrated herein are used to provide a further understanding of the present application, and constitute a part of the present application. The illustrative embodiments of the present application and the description thereof are used to explain the present application, and do not constitute an improper limitation to the present application.
FIG. 1 is a schematic diagram of an NTN network architecture 100.
FIG. 2 is a schematic diagram of another NTN network architecture 200.
FIG. 3 is a schematic diagram of a scenario in which a satellite operates in a normal operating mode.
FIG. 4 is a schematic diagram of a scenario in which a satellite operates in a store-and-forward operating mode.
FIG. 5 is a schematic flowchart of a communication method provided in an embodiment of the present application.
FIG. 6 is a schematic flowchart of another communication method provided in an embodiment of the present application.
FIG. 7 is a schematic flowchart of yet another communication method provided in an embodiment of the present application.
FIG. 8 is a schematic flowchart of still another communication method provided in an embodiment of the present application.
FIG. 9 is a schematic structural diagram of the composition of a communication apparatus provided in an embodiment of the present application.
FIG. 10 is a schematic structural diagram of the composition of another communication apparatus provided in an embodiment of the present application.
FIG. 11 is a schematic structural diagram of the composition of yet another communication apparatus provided in an embodiment of the present application.
FIG. 12 is a schematic structural diagram of a communication device provided in an embodiment of the present application.
FIG. 13 is a schematic structural diagram of a chip provided in an embodiment of the present application.
FIG. 14 is a schematic block diagram of a communication system provided in an embodiment of the present application.

### DETAILED DESCRIPTION

The technical solution in the embodiments of the present application is described below with reference to the drawings in the embodiments of the present application. Evidently, the described embodiments are part of the embodiments of the present application, rather than all of the embodiments. All other embodiments that are arrived at by a person of ordinary skill in the art on the basis of the embodiments in the present application without involving inventive skill fall within the scope of protection of the present application.

Unless otherwise defined, all technical and scientific terms used herein have the same meanings as commonly understood by a person of ordinary skill in the art to which the present application belongs. The terms used herein are only for the purpose of describing the embodiments of the present application, and are not intended to limit the present application.

When referring to "some embodiments", the following description describes a subset of all possible embodiments, but it can be understood that "some embodiments" may be the same subset or different subsets of all possible embodiments, and may be combined with each other without conflict.

It is also to be noted that the terms "first\second\third" as referred to in the embodiments of the present application are only to distinguish similar objects, and do not represent a specific order of objects. It can be understood that the specific order or sequential order of "first\second\third" may be interchanged if allowed, so that the embodiments of the present application described herein can be implemented in an order other than those illustrated or described herein.

Additionally, the term "and/or" used in embodiments of the present application is merely to describe associations between associated objects, indicating that there can be three kinds of relationships. For example, A and/or B may indicate three situations in which A exists alone, A and B exist simultaneously, or B exists alone. In addition, the character "/" herein generally indicates that the associated objects before and after this character are in an "or" relationship.

It should be understood that "indicating" mentioned in the embodiments of the present application may be direct indication or indirect indication, or may also represent association. For example, A indicating B may mean that A directly indicates B, for example, B may be obtained from A; or it may also mean that A indirectly indicates B, for example, A indicates C, and B may be obtained from C; or it may also mean that there is an association between A and B.

It should also be understood that "predefined", "protocol-agreed", "predetermined", or "predefined rules" mentioned in the embodiments of the present application may be implemented by pre-storing corresponding codes, tables, or other means available for indicating relevant information in a device (e.g., including a first device and/or a second device), and the specific implementation is not limited in the present application. For example, "predefined" may refer to being defined in a protocol. It should also be understood that in the embodiments of the present application, "protocol" may refer to a standard protocol in the field of communications, for example, it may include a long term evolution (LTE) protocol, a new radio (NR) protocol, and related protocols applied to future communication systems, and this is not limited by the present application.

The technical solutions set forth in the embodiments of the present application may be arbitrarily combined as long as they do not conflict with each other. In the description of the present application, "a plurality of" means two or more, unless otherwise specifically defined.

The technical solutions of the embodiments of the present application are applicable to various communication systems, such as an LTE system, an LTE time division duplex (TDD), a universal mobile telecommunication system (UMTS), an Internet of Things (IoT) system, a narrow band Internet of Things (NB-IoT) system, an enhanced machine-type communications (eMTC) system, a 5G communication system (also referred to as NR communication system), or a future communication system.

In the embodiments of the present application, a terminal device may be a device that provides voice/data to a user, such as handheld devices and vehicle-mounted devices having wireless connection functions. Currently, some examples of the terminal include: an access terminal, a user equipment (UE), a mobile phone, a tablet computer, a notebook computer, a palmtop computer, a mobile Internet device (MID), a wearable device, a virtual reality (VR) device, an augmented reality (AR) device, an industrial control wireless terminal, a self-driving wireless terminal, a remote medical surgery wireless terminal, a smart grid wireless terminal, a transportation safety wireless terminal, a smart city wireless terminal, a smart home wireless terminal, a cellular phone, a cordless phone, a session initiation protocol (SIP) phone, a wireless local loop (WLL) station, a personal digital assistant (PDA), a handheld device having a wireless communication function, a computing device or another processing device connected to a wireless modem, a wearable device, a terminal device in a 5G network, a terminal device in a future evolved public land mobile network (PLMN), or the like, which is not limited by the embodiments of the present application.

As an example rather than a limitation, in the embodiments of the present application, the terminal device may also be a wearable device. The wearable device may also be referred to as a wearable smart device, which is a general term for wearable devices that are developed by intelligently designing daily wear applying a wearable technology, such as glasses, gloves, watches, clothes, and shoes. The wearable device is a portable device that is directly worn on the body or integrated into clothes or an accessory of a user. The wearable device is not only a hardware device, but also implements powerful functions by means of software support, data interaction, and cloud interaction. In a broad sense, wearable smart devices include those that are fully functional and large in size, and can implement complete or partial functionality without dependence on smart phones, such as smart watches or smart glasses, and those that only focus on a certain type of application function and need to be used in cooperation with other devices such as smart phones, such as various smart bracelets, smart jewelry, etc., for monitoring physical signs.

Additionally, in the embodiments of the present application, the terminal device may alternatively be a terminal device in an IoT system. IoT is an important component of future information technology development, and its main technical feature is to connect objects to a network using a communications technology, thereby achieving an intelligent network for human-machine interconnection and object-object interconnection.

It should be noted that the terminal device and the access network device may communicate with each other using a certain air interface technology (e.g., NR or LTE technology). The terminal devices may also communicate with each other using a certain air interface technology (e.g., NR or LTE technology).

It should be noted that the apparatus for implementing the functions of the terminal device may be a terminal device, or may be an apparatus that can support the terminal device in implementing the functions, for example, a chip system or a chip, and the apparatus may be installed in the terminal device. In the embodiments of the present application, the chip system may consist of a chip, or may include a chip and other discrete components.

In the embodiments of the present application, a radio access network (RAN) may provide authorized users in a specific area with the functionality to access a communication network. Specifically, the RAN may include wireless network devices in a 3rd Generation Partnership Project (3GPP) network and/or access points in a Non-3GPP network. Hereinafter, for convenience of description, a RAN device is used for representation.

The RAN device can be responsible for achieving functions such as air interface-side wireless resource management, Quality of Service (QoS) management, data compression, and encryption. The RAN device provides access services for the terminal device, thereby completing forwarding of control signals and user data between the terminal devices and a core network.

The RAN device may include, for example, but is not limited to: a satellite, a macro base station, a micro base station (also referred to as small cell), a radio network controller (RNC), a node B (NB), a base station controller (BSC), a base transceiver station (BTS), a home base station (e.g., a home evolved Node B or Home Node B (HNB)), a baseband unit (BBU) an access point (AP), wireless relay node, wireless backhaul node, transmission point (TP), a transmission and reception point (TRP) in a WiFi system. The RAN device may also be a gNB or a transmission point (TRP or TP) in a 5G (e.g., NR) system, one or a group of antenna panels (including a plurality of antenna panels) of a base station in a 5G system, or a network node constituting a gNB or transmission point, such as a distributed units (DU), or a base station in a next-generation 6G communication system. The embodiments of the present application do not limit the specific technology and specific device form used by the RAN device.

To facilitate the understanding of the technical solutions of the embodiments of the present application, the following related technologies of the embodiments of the present application are described below. The following related technologies can be arbitrarily combined with the technical solutions of the embodiments of the present application as optional solutions, all of which fall within the scope of protection of the embodiments of the present application.

At present, with people's pursuit of higher speed, lower delay, high-speed mobility and energy efficiency, as well as the diversity and complexity of services in future life, the 3GPP international standards organization has initiated the development of 5G. The main application scenarios of 5G include: Enhanced Mobile Broadband (eMBB), Ultra Reliable and Low Latency Communication (URLLC), and Massive Machine Type Communication (mMTC).

NR can also be deployed independently. In 5G network environments, in order to reduce air interface signaling, quickly restore wireless connections, and quickly restore data services, a new Radio Resource Control (RRC) state, i.e., an RRC inactive (RRC_INACTIVE) state, is defined. This state is different from an RRC idle (RRC_IDLE) state and an RRC active (RRC_ACTIVE) state. The three states are each briefly described below.

RRC_INACTIVE state: Mobility is based on cell selection/reselection by a terminal device, a connection exists between a core network (CN) and an NR, an access stratum (AS) context of the terminal device is stored on a certain satellite, paging is triggered by a RAN, a RAN-based paging area is managed by the RAN, and the location of the terminal device is known to the satellite side at the granularity of the RAN-based paging area.

RRC_IDLE state: Mobility is based on cell selection/reselection by the terminal device, paging is initiated by the CN, and a paging area is configured by the CN. The AS context of the terminal device does not exist on the satellite side. No RRC connection exists.

RRC_ACTIVE state: An RRC connection exists, and there is an AS context of the terminal device in both the satellite and the terminal device. The location of the terminal device is known to the satellite side at the granularity of a specific cell. Mobility is controlled by the satellite side. Unicast data can be transmitted between the terminal device and the satellite.

Currently, 3GPP is conducting research on NTN technology, and an NTN generally provides communication services for ground users by using satellite communication. Compared with terrestrial cellular network communication, satellite communication has many unique advantages. First, satellite communication is not subject to user geographical restrictions. For example, general land-based communications cannot cover areas such as oceans, mountains and deserts, where communication devices cannot be set up, or areas without communication coverage due to a sparse population. For satellite communication, since a single satellite can cover a large area and satellites can orbit around the earth, every corner of the earth can theoretically be covered by satellite communication. Secondly, satellite communication has greater social value. Satellite communication can cover remote mountainous areas, as well as poor and backward countries or regions, at a lower cost, so that people in these regions can enjoy advanced voice communication and mobile Internet technologies, which is helpful for narrowing the digital gap with developed regions and facilitating the development of these areas. Furthermore, satellite communication covers long distances, and the cost of communication does not increase significantly as the communication distance increases. Finally, satellite communication has high stability, and is not affected by natural disasters.

Communication satellites are divided according to orbit altitude into Low-Earth Orbit (LEO) satellites, Medium-Earth Orbit (MEO) satellites, Geostationary Earth Orbit (GEO) satellites, High Elliptical Orbit (HEO) satellites, and the like. At the current stage, research is mainly conducted on LEO satellites and GEO satellites. These two types of satellites are each briefly described below.

LEO satellite: also known as low-earth orbit satellite, having an altitude ranging from 500km to 1500km and a corresponding orbital period of approximately 1.5-2 hours. Signal propagation delay of single-hop communication between users is generally less than 20 ms. The maximum satellite visual time is 20 minutes. In addition, signal propagation distance is short, link loss is small, and transmission power requirements for user terminals are not high.

GEO satellite: also known as geostationary earth orbit satellite, having an orbital altitude of 35,786km and a rotation period around the earth of 24 hours. Signal propagation delay of single-hop communication between users is generally 250 ms.

To ensure the coverage of satellites and improve the system capacity of the entire satellite communication system, the satellites use multiple beams to cover the ground. A satellite can form dozens or even hundreds of beams to cover the ground; and one satellite beam can cover a ground area having a diameter of tens to hundreds of kilometers.

Based on two functions of satellites, i.e., a transparent forwarding function and a regenerative forwarding function, NTN network architectures primarily include transparent forwarding-based NTN network architectures and regenerative forwarding-based NTN network architectures.

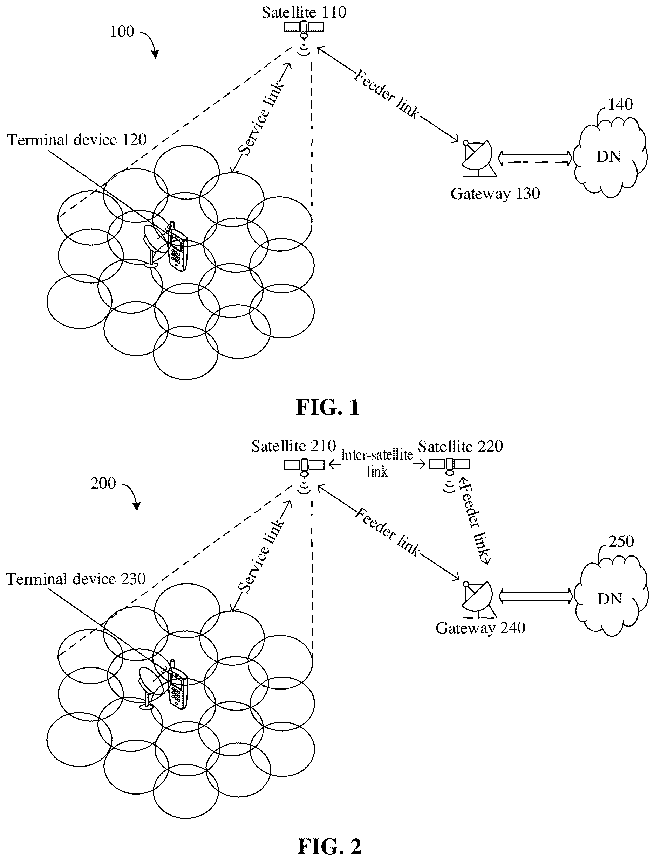

FIG. 1 shows a schematic diagram of an NTN network architecture 100. As shown in FIG. 1, the NTN network architecture is a transparent forwarding-based NTN network architecture. The NTN network architecture may include a satellite 110, a terminal device 120 (illustrated as a mobile phone in the figure), a gateway 130, and a data network (DN) 140. There are one or more gateways 130 used to connect the satellite 110 and the data network 140; a link between the satellite 110 and the gateway 130 is a feeder link, and a link between the satellite 110 and the terminal device 120 is a service link.

It should be noted that, for a satellite 110 having a transparent forwarding function, the satellite 110 may provide functions of radio frequency filtering, frequency conversion and amplification; the satellite 110 may provide transparent forwarding of signals, and generally does not alter waveform signals during transparent forwarding.

FIG. 2 shows a schematic diagram of another NTN network architecture 200. As shown in FIG. 2, the NTN network architecture is a regenerative forwarding-based NTN network architecture. The NTN network architecture may include a satellite 210, a satellite 220, a terminal device 230 (illustrated as a mobile phone in the figure), a gateway 240, and a data network (DN) 250. There are one or more gateways 240 used to connect the satellite 210 and the data network 250, and/or used to connect the satellite 220 and the data network 250, and a core network element is located between the gateway 240 and the data network 250; a link between the satellite 210 or the satellite 220 and the gateway 240 is a feeder link, a link between the satellite 210 and the terminal device 230 is a service link, and a link between the satellite 210 and the satellite 220 is an inter-satellite link.

It should be noted that, for a satellite 210 having a regenerative forwarding function, the satellite 210 may not only provide the functions of radio frequency filtering, frequency conversion and amplification, but also provide the functions of demodulation/decoding, routing/conversion, and encoding/modulation.

It should be further noted that an area formed by dashed lines in FIG. 1 or FIG. 2 is referred to as a beam foot print, and the beam foot print may be a foot print formed by a single beam, or may be a foot print formed by a plurality of beams, which is not limited in the embodiments of the present application.

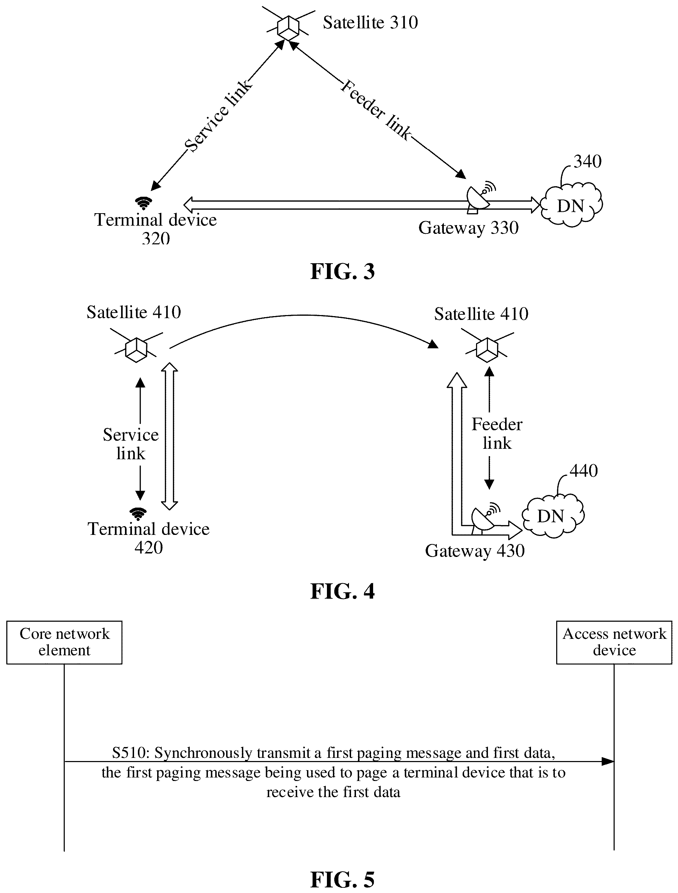

There are two satellite operating modes: a normal operating mode and a store-and-forward operating mode. A description is provided below for satellites operating in these two operating modes with reference to FIG. 3 and FIG. 4.

For a satellite operating in the normal operating mode, as shown in FIG. 3, signaling/data exchange between a terminal device 320 and a data network (DN) 340 by means of a satellite 310 requires that a service link and a feeder link be simultaneously available, and an end-to-end connection between the terminal device 320 and the data network 340 by means of the satellite 310 is therefore continuous. A link between the satellite 310 and the terminal device 320 is a service link, a link between the satellite 310 and a gateway 330 is a feeder link, and the satellite 310 performs signaling/data exchange with the data network 340 by means of the gateway 330.

For a satellite operating in the store-and-forward operating mode, the store-and-forward operating mode refers to that, in an NTN network, a service link between the satellite and a terminal device and a feeder link between the satellite and a ground gateway may not simultaneously be available, and thus the satellite is required to store transmitted data accordingly when one link is connected, and the transmitted data is forwarded when the other link becomes connected. This approach can reduce the cost of ground gateway deployment and enhance deployment flexibility, e.g., eliminating the need to deploy ground gateways in an area close to the terminal device. This mode is suitable for services that have less sensitive/stringent latency requirements.

As shown in FIG. 4, in the store-and-forward operating mode, the service link and the feeder link cannot be simultaneously available, and signaling/data exchange between a terminal device 420 and a data network (DN) 440 by means of a satellite 410 includes the following two steps:

Step 1: Signaling/data exchange is performed between the terminal device 420 and the satellite 410 through a service link, at which time no feeder link connection is established between the satellite 410 and a gateway 430; and as the satellite 410 gradually moves away from the terminal device 420, the satellite 410 disconnects the service link between the satellite and the terminal device 420.

Step 2: When the satellite flies over a data network 440, the satellite 410 establishes a connection with the data network 440 by means of the gateway 430, at which time the satellite 410 and the data network 440 may communicate with each other through a feeder link.

A core network is mentioned in the following embodiments, and the core network may be located between a gateway and a data network. For example, as shown in FIG. 1, the core network may be located between the gateway 130 and the data network 140. Core network elements in the embodiments of the present application mainly include a serving gateway (S-GW), a user plane function (UPF), a mobility management entity (MME), and an access and mobility management function (AMF). Description of S-GW, UPF, MME, and AMF are illustrated below.

S-GW: mainly used as an anchor point for inter-/intra-3GPP network handovers, and provides data routing and forwarding, paging trigger, charging, and lawful interception, etc.

UPF: mainly used to receive and forward user plane data. For example, the UPF may receive user plane data from a DN, and transmits the user plane data to a terminal device by means of a RAN device. The UPF may also receive user plane data from the terminal device by means of the RAN device, and forward the user plane data to the DN.

MME: a key control node in a 3GPP protocol LTE access network, which is responsible for locating and paging processes of a terminal device in the idle mode, including relaying.

AMF: mainly used for functions such as access control, mobility management, and attachment and detachment.

In the related art, a satellite receives MT-data from a core network element after receiving a response message for a Paging message from a terminal device and forwarding the response message for the Paging message to the core network element, which greatly increases transmission waiting latency for the satellite to forward the MT-data to the terminal device.

On this basis, the embodiment of the present application provides a communication method, in which an access network device (e.g., a satellite) synchronously receives a first paging message and first data from a core network element, the first paging message being used to page a terminal device that is to receive the first data, where a time interval between a time domain in which the access network device receives the first paging message and a time domain in which the access network device receives the first data is less than a first threshold. In this way, the access network device may synchronously receive the first paging message and the first data from the core network element, such that after learning that the terminal device acknowledges that the first data is to be received or has not acknowledged that the first data is not to be received, the access network device may timely transmit the first data to the terminal device, thereby shortening the transmission waiting latency.

To facilitate understanding of the technical solution of the embodiments of the present application, the technical solution of the present application will be described in detail below by means of specific embodiments. The above related techniques can be arbitrarily combined with the technical solution of the embodiments of the present application as optional solutions, all of which fall within the scope of protection of the embodiments of the present application. The embodiments of the present application include at least some of the following content.

FIG. 5 shows a schematic flowchart of a communication method provided in an embodiment of the present application. As shown in FIG. 5, the method may include the following operation S510.

At S510, a core network element synchronously transmits a first paging message and first data to an access network device, the first paging message being used to page a terminal device that is to receive the first data.

The core network element synchronously transmitting the first paging message and the first data to the access network device may be implemented by: a time interval between a time domain in which the core network element transmits the first paging message and a time domain in which the core network element transmits the first data being less than a second threshold.

Correspondingly, the access network device may synchronously receive the first paging message and the first data from the core network element.

The access network device synchronously receiving the first paging message and the first data from the core network element may be implemented by: a time interval between a time domain in which the access network device receives the first paging message and a time domain in which the access network device receives the first data being less than a first threshold.

It should be noted that the first threshold may be predefined in the protocol, or may be obtained by other manners, which is not limited by the embodiments of the present application.

It should be further noted that the second threshold may be predefined in the protocol, or may be obtained by other manners, which is not limited by the embodiments of the present application.

It should be further noted that the first threshold and the second threshold may be the same threshold or different thresholds, which is not limited by the embodiments of the present application.

In some embodiments, the time interval between the time domain in which the core network element transmits the first paging message and the time domain in which the core network element transmits the first data being less than the second threshold may include that: the core network element transmits the first paging message and the first data separately, and the time interval between the time domain in which the core network element transmits the first paging message and the time domain in which the core network element transmits the first data is small.

In some other embodiments, the time interval between the time domain in which the core network element transmits the first paging message and the time domain in which the core network element transmits the first data being less than the second threshold may include that: the core network element carries the first paging message and the first data in the same information for transmission.

Correspondingly, for the access network device, in some embodiments, the time interval between the time domain in which the access network device receives the first paging message and the time domain in which the access network device receives the first data being less than the first threshold may include that: the access network device receives the first paging message and the first data separately, and the time interval between the time domain in which the access network device receives the first paging message and the time domain in which the access network device receives the first data is small.

In some other embodiments, the time interval between the time domain in which the access network device receives the first paging message and the time domain in which the access network device receives the first data being less than the first threshold may include that: the access network device receives information that carries the first paging message and the first data.

In some embodiments, the core network element synchronously transmitting the first paging message and the first data to the access network device may include that: when there is a feeder link between the core network element and the access network device, the core network element synchronously transmits the first paging message and the first data to the access network device.

Exemplarily, when there is a feeder link between the core network element and the access network device, a feeder link connection is established between the core network element and the access network device, so that the core network element can synchronously transmit the first paging message and the first data to the access network device.

Exemplarily, when there is a feeder link between the core network element and the access network device, the core network element may synchronously transmit the first paging message and the first data to the access network device via broadcast.

It should be noted that the core network element may be at least one of: an S-GW, a UPF, an MME, or an AMF.

Further, an MME/AMF may transmit the first paging message to the access network device, an S-GW/UPF may transmit the first data to the access network device, and the transmission of the first paging message by the MME/AMF to the access network device may be synchronous with the transmission of the first data by the S-GW/UPF to the access network device.

It should be further noted that the core network element, after transmitting the first data to the access network device, may choose to cache a copy of the first data. Therefore, in a case where the first data is not transmitted to the terminal device by the access network device, the core network element may retransmit the first data to the access network device, so as to retransmit the first data to the terminal device by the access network device.

It should be further noted that the core network element, after transmitting the first data to the access network device, may choose not to cache the copy of the first data, thereby saving storage resources.

Exemplarily, the first data may be first MT-data.

According to the communication method provided by the embodiment of the present application, a core network element may synchronously transmit a first paging message and first data to an access network device, and the access network device may synchronously receive the first paging message and the first data from the core network element, where the first paging message is used to page a terminal device that is to receive the first data. In this way, the access network device may synchronously receive the first paging message and the first data from the core network element, such that subsequently, after learning that the terminal device acknowledges that the first data is to be received or has not acknowledged that the first data is not to be received, the access network device may timely transmit the first data to the terminal device, thereby shortening the transmission waiting latency.

In some embodiments, the access network device may cache the first data, and the access network device may forward the first data to the terminal device.

It should be noted that the access network device may cache and forward the first data to the terminal device, indicating that the operating mode of the access network device is the store-and-forward operating mode mentioned in the foregoing embodiment.

It should be further noted that for the access network device in the store-and-forward mode, on one hand, when the core network element exchanges data/signaling with the access network device (e.g., the core network element transmits the first data to the access network device), a feeder link exists between the core network element and the access network device, and a service link between the terminal device and the access network device is disconnected. On the other hand, when the terminal device exchanges data/signaling with the access network device, a service link exists between the terminal device and the access network device, and a feeder link between the core network element and the access network device is disconnected.

In other words, after the access network device performs data/signaling exchange with the core network element, if the access network device needs to perform data/signaling exchange with the terminal device, the feeder link between the core network element and the access network device needs to be disconnected, and the service link between the access network device and the terminal device is connected to realize data/signaling exchange between the access network device and the terminal device. Then, if the access network device needs to perform data/signaling exchange with the core network again, the service link between the access network device and the terminal device needs to be disconnected, and the feeder link between the access network device and the core network element is reconnected to realize data/signaling exchange between the access network device and the core network element.

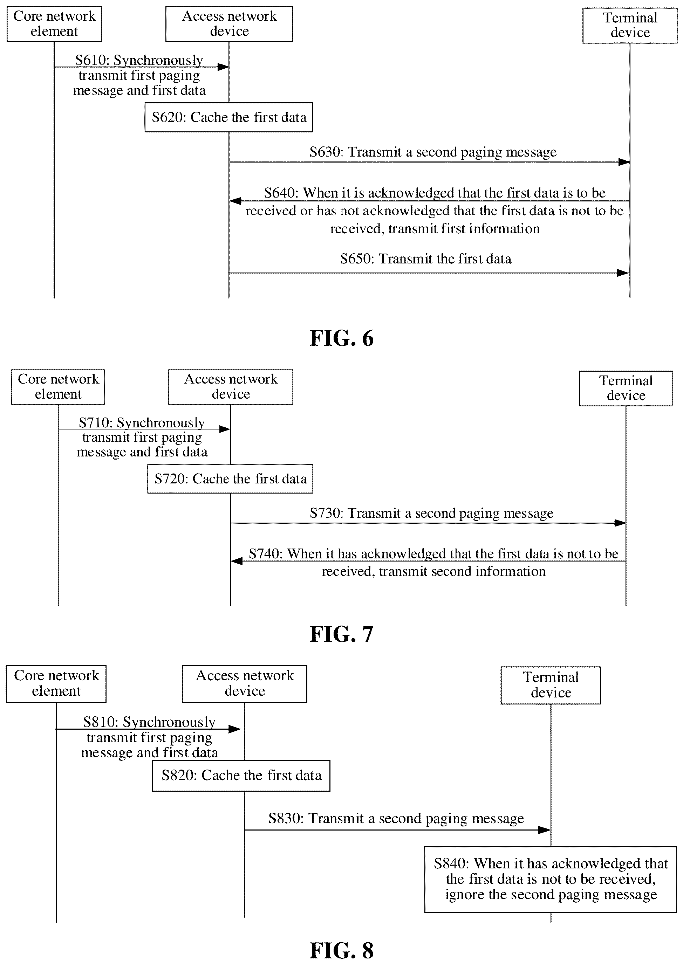

Based on S510, after the core network element transmits the first data to the access network device, the access network device may cache the first data, and transmit a second paging message to the terminal device, to page the terminal device that is to receive the first data within the network coverage of the access network device. After receiving the second paging message, the terminal device may respond to the second paging message. A response situation of the terminal device to the second paging message is described below with reference to FIG. 6 to FIG. 8.

FIG. 6 shows a schematic flowchart of another communication method provided in an embodiment of the present application. As shown in FIG. 6, the method may include the following operations S610 to S650.

At S610, a core network element synchronously transmits a first paging message and first data to an access network device.

At S620, the access network device caches the first data.

At S630, the access network device transmits a second paging message to a terminal device.

At S640, when the terminal device acknowledges that the first data is to be received or has not acknowledged that the first data is not to be received, the terminal device transmits first information to the access network device.

At S650, the access network device transmits the first data to the terminal device.

The first paging message is used to page the terminal device that is to receive the first data.

Correspondingly, the access network device may synchronously receive the first paging message and the first data from the core network element.

The second paging message is used to page, within the network coverage of the access network device, the terminal device that is to receive the first data.

Correspondingly, the terminal device may receive the second paging message from the access network device.

The first information indicates that the terminal device acknowledges that the first data is to be received or has not acknowledged that the first data is not to be received.

Correspondingly, the access network device may receive the first information from the terminal device.

Correspondingly, the terminal device may receive the first data from the access network device.

It should be noted that after the access network device caches the first data, it enables the access network device to have the first data stored in its cache. In this way, the access network device can subsequently transmit the cached first data to the terminal device.

By means of the present method, when the access network device has the first data cached, the access network device, after subsequently learning that the terminal device acknowledges that the first data is to be received or has not acknowledged that the first data is not to be received, may timely transmit the first data to the terminal device, thereby shortening the transmission waiting delay.

It should be noted that, when the access network device learns that the terminal device acknowledges that the first data is to be received, or learns that the terminal device has not acknowledged that the first data is not to be received, the access network device needs to transmit the first data to the terminal device. In other words, the access network device learning that the terminal device acknowledges that the first data is to be received may be understood as that, the terminal device explicitly learns that the terminal device needs to receive the first data, in which case the access network device may transmit the first data to the terminal device. The access network device learning that the terminal device has not acknowledged that the first data is not to be received may be understood as that, the access network device implicitly learns that the terminal device needs to receive the first data, in which case the access network device may also transmit the first data to the terminal device.

Further, the access network device implicitly learning that the terminal device needs to receive the first data (i.e., the first information indicates that the terminal device has not acknowledged the first data is not to be received) may be understood as, although the access network device does not explicitly learn that the terminal device needs to receive the first data, since the access network device does not learn that the terminal device has acknowledged that the first data is not to be received, the access network device, upon receiving the first information, may transmit the first data to the terminal device. In this case, the first information may be considered to be trigger information.

It should be further noted that, since the core network element transmits the first paging message and the first data to the access network device when there is a feeder link between the core network element and the access network device, when the access network device transmits the first data to the terminal device, the access network device needs to disconnect the feeder link between the core network element and the access network device and a service link needs to exist between the access network device and the terminal device.

In other words, in some embodiments, the access network device transmitting the first data to the terminal device may include that: the access network device transmits the first data to the terminal device when there is a service link between the access network device and the terminal device.

Exemplarily, when there is a service link between the access network device and the terminal device, a service link connection is established between the access network device and the terminal device, so that the access network device can transmit the first data to the terminal device.

Exemplarily, when there is a service link between the access network device and the terminal device, the access network device may transmit the first data to the terminal device via broadcast.

It should be noted that the first information transmitted by the terminal device to the access network device may be considered to be a response message for the second paging message, and the response message for the second paging message may be an uplink message.

Exemplarily, the first information may be an RRC connection establishment request message.

Exemplarily, the first information may be an RRC connection resume request message.

Exemplarily, the first information may be an Early Data request message.

Exemplarily, the first information may be acknowledgment (ACK) information, which may indicate that the terminal device has acknowledged that the first data is to be received, or has not acknowledged that the first data is not to be received.

Exemplarily, the first information may be response information that may include an acknowledgment indication field. When a value of the acknowledgment indication field is a first value (e.g., 0 or 1), the response information may indicate that the terminal device has acknowledged that the first data is to be received or has not acknowledged that the first data is not to be received.

In some embodiments, the access network device transmitting the first data to the terminal device may include that:
the terminal device enters a connected state, and the access network device may transmit the first data to the terminal device through a data radio bearer (DRB); or,
the terminal device does not enter the connected state, and the access network device may transmit the first data to the terminal device through a mobile terminated-early data transmission (MT-EDT) manner; or,
the terminal device does not enter the connected state, and the access network device may transmit the first data to the terminal device via a mobile terminated-small data transmission (MT-SDT) manner.

It should be further noted that there may be no chronological order between S620 and S630, i.e., there may be no chronological order between the operations of caching the first data by the access network device and transmitting the second paging message to the terminal device by the access network device. In other words, the access network device may cache the first data first, and then transmit the second paging message to the terminal device; or alternatively, the access network device may transmit the second paging message to the terminal device first, and then cache the first data; or alternatively, the access network device may cache the first data and transmit the second paging message to the terminal device at the same time, which is not limited by the embodiment of the present application.

According to the communication method provided by the embodiment of the present application, a core network element may synchronously transmit a first paging message and first data to an access network device; the access network device, after synchronously receiving the first paging message and the first data, may cache the first data, and transmit a second paging message to a terminal device; after receiving the second paging message, if the terminal device acknowledges that the first data is to be received or has not acknowledged that the first data is not to be received, it may transmit first information to the access network device; and the access network device, after receiving the first information, may transmit the first data to the terminal device. In this way, the access network device, after learning that the terminal device has acknowledged that the first data is to be received or has not acknowledged that the first data is not to be received, may timely transmit the cached first data to the terminal device, thereby shortening the transmission waiting latency.

FIG. 7 shows a schematic flowchart of yet another communication method provided in an embodiment of the present application. As shown in FIG. 7, the method may include the following operations S710 to S740.

At S710, a core network element synchronously transmits a first paging message and first data to an access network device.

At S720, the access network device caches the first data.

At S730, the access network device transmits a second paging message to a terminal device.

At S740, when the terminal device acknowledges that the first data is not to be received, the terminal device transmits second information to the access network device.

The first paging message is used to page the terminal device that is to receive the first data.

Correspondingly, the access network device may synchronously receive the first paging message and the first data from the core network element.

The second paging message is used to page, within the network coverage of the access network device, the terminal device that is to receive the first data.

Correspondingly, the terminal device may receive the second paging message from the access network device.

The second information indicates that the terminal device acknowledges that the first data is not to be received.

The second information carries indication information that is used to indicate that the terminal device has received and/or cached the first data.

Correspondingly, the access network device may receive the second information from the terminal device.

By means of the present method, the access network device, after receiving the second information, may learn that the terminal device does not need to receive the first data, and thus may not transmit the first data to the terminal device, thereby preventing a waste of radio resources.

In addition, the access network device may learn, through the indication information carried in the second information, a reason why the terminal device does not need to receive the first data. In other words, the reason why the terminal device does not need to receive the first data is that: the terminal device has received and/or cached the first data.

It should be understood that the terminal device having received and/or cached the first data may be understood as that the terminal device has received the first data; or alternatively, the terminal device has cached the first data; or alternatively, the terminal device has received and cached the first data.

In some embodiments, the method may further include the operation that: the access network device deletes the first data in response to the second information.

By means of the present method, the access network device, after learning that the terminal device has received and/or cached the first data, may timely delete the cached first data, thereby saving storage resources.

It is to be noted that the second information transmitted by the terminal device to the access network device may be considered to be a response message for the second paging message, and the response message for the second paging message may be an uplink message.

Exemplarily, the second information may be an RRC connection establishment request message.

Exemplarily, the second information may be an RRC connection resume request message.

Exemplarily, the second information may be an Early Data request message.

Exemplarily, the second information may be negative acknowledgment (NACK) information, which may indicate that the terminal device has acknowledged that the first data is not to be received.

Exemplarily, the second information may be response information that may include an acknowledgment indication field. When a value of the acknowledgment indication field is a second value (e.g., 0 or 1), the response information may indicate that the terminal device acknowledges that the first data is not to be received.

It should be further noted that there may be no chronological order between S720 and S730, that is, there may be no chronological order between the operations of caching the first data by the access network device and transmitting the second paging message to the terminal device by the access network device. In other words, the access network device may cache the first data first, and then transmit the second paging message to the terminal device; or alternatively, the access network device may transmit the second paging message to the terminal device first, and then cache the first data; or alternatively, the access network device may cache the first data and transmit the second paging message to the terminal device at the same time, which is not limited by the embodiment of the present application.

According to the communication method provided by the embodiment of the present application, a core network element may synchronously transmit a first paging message and first data to an access network device, and the access network device, after synchronously receiving the first paging message and the first data, may cache the first data and transmit a second paging message to a terminal device; and after receiving the second paging message, if the terminal device acknowledges receipt of the first data or does not acknowledge refusal of the first data, it may transmit second information to the access network device. In this way, the access network device may learn that the terminal device does not need to receive the first data, and thus it may not transmit the first data to the terminal device, thereby preventing a waste of radio resources.

FIG. 8 shows a schematic flowchart of still another communication method provided in an embodiment of the present application. As shown in FIG. 8, the method may include the following operations S810 to S840.

At S810, a core network element synchronously transmits a first paging message and first data to an access network device.

At S820, the access network device caches the first data.

At S830, the access network device transmits a second paging message to the terminal device.

At S840, when the terminal device acknowledges that the first data is not to be received, the terminal device ignores the second paging message.

The first paging message is used to page the terminal device that is to receive the first data.

Correspondingly, the access network device may synchronously receive the first paging message and the first data from the core network element.

The second paging message is used to page, within the network coverage of the access network device, the terminal device that is to receive the first data.

Correspondingly, the terminal device may receive the second paging message from the access network device.

It should be noted that the terminal device ignoring the second paging message when the terminal device acknowledges that the first data is not received may be understood as that, the terminal device may not transmit a response message for the second paging message to the access network device when the terminal device acknowledges that the first data is not to be received. In other words, when the terminal device acknowledges that the first data is not to be received, the terminal device may not transmit any uplink message to the access network device.

Exemplarily, the terminal device may not transmit an RRC connection establishment request message to the access network device.

Exemplarily, the terminal device may not transmit an RRC connection resume request message to the access network device.

Exemplarily, the terminal device may not transmit an Early Data request message to the access network device.

It should be further noted that there may be no chronological order between S820 and S830, that is, there may be no chronological order between the operations of caching the first data by the access network device and transmitting the second paging message to the terminal device by the access network device. In other words, the access network device may cache the first data first, and then transmit the second paging message to the terminal device; or, the access network device may transmit the second paging message to the terminal device first, and then cache the first data; or, the access network device may simultaneously cache the first data and transmit the second paging message to the terminal device, which is not limited by the embodiment of the present application.

According to the communication method provided by the embodiment of the present application, a core network element may synchronously transmit a first paging message and first data to an access network device; the access network device, after synchronously receiving the first paging message and the first data, may cache the first data, and transmit a second paging message to a terminal device; and after receiving the second paging message, if the terminal device acknowledges that the first data is not to be received, it may ignore the second paging message. In this way, the terminal device, upon acknowledging that the first data is not to be received, may choose to ignore the second paging message, and thus it does not transmit the response message for the second paging message to the access network device, thereby preventing a waste of radio resources.

In some embodiments, the first paging message may include at least one of the following:
location assistance information of the terminal device;
validity time information of the first data; or
first identification information associated with the first data.

In some embodiments, when the first paging message includes the location assistance information of the terminal device, the access network device may subsequently, on the basis of the location assistance information of the terminal device, locate the terminal device that is to receive the first data within the network coverage, and then transmit the second paging message to the terminal device to page the terminal device.

In other words, the second paging message is transmitted by the access network device on the basis of the location assistance information of the terminal device; and the location assistance information of the terminal device is carried in the first paging message.

By means of the present method, the access network device may transmit the second paging message to the terminal device on the basis of the location assistance information of the terminal device, thereby shortening the time required for paging the terminal device by the positioning of the terminal device.

Further, the location assistance information of the terminal device includes at least one of the following:
cell identification information of a cell(s) where the terminal device performs N previous transmissions of data and/or signaling, N being a positive integer;
location information of the terminal device; or
tracking area information of the terminal device.

Exemplarily, when the location assistance information of the terminal device includes the cell identification information of the terminal device in N previous transmissions of data and/or signaling, the access network device may fly to the area identified by the cell identification and transmit the second paging message to the terminal device.

By means of the present method, the positioning of the terminal device may be realized by the access network device using the cell identification information of the terminal device in the N previous transmissions of data and/or signaling, so that the access network device can transmit the second paging message to the terminal device on the basis of the cell identification information of the terminal device in the N previous transmissions of data and/or signaling, thereby shortening the time required for paging the terminal device.

Exemplarily, when the location assistance information of the terminal device includes the location information of the terminal device, the access network device may fly to a space above the location of the terminal device to transmit the second paging message to the terminal device.

By means of the present method, the positioning of terminal device may be realized by the access network device using the location information of the terminal device, so that the access network device can transmit the second paging message to the terminal device on the basis of the location information of the terminal device, thereby shortening the time required for paging the terminal device.

Exemplarily, when the location assistance information of the terminal device includes the tracking area information of the terminal device, the access network device may fly to a tracking area registered by the terminal device to transmit the second paging message to the terminal device.

By means of the present method, the positioning of terminal device may be realized by the access network device using the tracking area information of the terminal device, so that the access network device may transmit the second paging message to the terminal device on the basis of the tracking area information of the terminal device, thereby shortening the time required for paging the terminal device.

**It** should be noted that, when the first paging message includes the location assistance information of the terminal device, the access network device may subsequently locate, on the basis of the location assistance information of the terminal device, the terminal device that is to receive the first data within the network coverage, and then transmit the first data to the terminal device.

By means of the present method, the access network device may transmit the first data to the terminal device on the basis of the location assistance information of the terminal device, thereby shortening the time required for receiving the first data by the terminal device through positioning of the terminal device.

Regarding an exemplary description of transmitting, by the access network device, the first data to the terminal device on the basis of the location assistance information of the terminal device, reference may be made to the related description of transmitting, by the access network device, the second paging message to the terminal device on the basis of the location assistance information of the terminal device, which will not be reiterated here.

In some embodiments, when the first paging message includes the validity time information of the first data, the access network device may subsequently determine, on the basis of the validity time information of the first data, whether the first data is valid, and delete the first data when the first data is invalid.

In other words, the access network device may determine, on the basis of the validity time information of the first data, whether the first data is valid; and when the first data is invalid, the access network device deletes the first data. The validity time information of the first data is carried in the first paging message.

By means of the present method, the access network device may obtain that the first data is invalid on the basis of the validity time information of the first data, and may timely delete the first data when the first data is invalid, thereby saving storage resources.

Further, the validity time information of the first data is used to indicate a validity time duration for which the first data is transmitted to the terminal device; and/or
the validity time information of the first data is used to indicate the latest moment at which the first data is transmitted to the terminal device.

It is to be noted that in some embodiments, when the validity time information of the first data is used to indicate the validity time duration for which the first data is transmitted to the terminal device, if the access network device transmits the first data to the terminal device within the validity time duration, the first data may be considered valid. If the access network device does not transmit the first data to the terminal device within the validity time duration, the first data may be considered invalid, and in this case, the access network device may delete the first data.

Exemplarily, a start moment of the validity time duration may be a moment at which the access network device receives the first paging message, and an end moment of the validity time duration may be a predefined moment. The predefined moment may be a specific moment that is predefined, or the predefined moment may be a moment after a period of time from the start moment.

For example, using a 24-hour system as an example, assuming that the moment at which the access network device receives the first paging message is 9:00, and a predefined specific moment is 10:00, then the validity time duration is from 9:00 to 10:00. If the access network device transmits the first data to the terminal device within 9:00 to 10:00, the first data may be considered valid; and if the access network device does not transmit the first data to the terminal device within 9:00 to 10:00, the first data may be considered invalid, and in this case, the access network device may delete the first data.

For another example, using a 24-hour system as an example, assuming that the moment at which the access network device receives the first paging message is 9:00, and stating from 9:00, two hours later, that is, 11:00, is the end moment of the validity time duration, then the validity time duration is from 9:00 to 11:00. If the access network device transmits the first data to the terminal device within 9:00 to 11:00, the first data may be considered valid; and if the access network device does not transmit the first data to the terminal device within 9:00 to 11:00, the first data may be considered invalid, and in this case, the access network device may delete the first data.

It should be noted that in the embodiment of the present application, the start moment of the validity time duration being the moment at which the access network device receives the first paging message is taken as an example for exemplary description. It should be understood that the start moment of the validity time duration may alternatively be a moment at which the core network element transmits the first paging message, or may be another predefined moment, which is not limited by the embodiment of the present application.

By means of the present method, the access network device may obtain that the first data is invalid on the basis of the validity time duration for which the first data is transmitted to the terminal device, and may timely delete the first data when the first data is invalid, thereby saving storage resources.

It should be noted that in some other embodiments, when the validity time information of the first data is used to indicate the latest moment at which the first data is transmitted to the terminal device, if the access network device transmits the first data to the terminal device before the latest moment, the first data may be considered valid; and if the access network device does not transmit the first data to the terminal device at the latest moment, the first data may be considered invalid, and in this case, the access network device may delete the first data.

Exemplarily, the latest moment may be a predefined moment.

For example, using a 24-hour system as an example, assuming that the latest moment is 11:00, if the access network device transmits the first data to the terminal device before 11:00, the first data may be considered valid; and if the access network device transmits the first data to the terminal device after 11:00, the first data may be considered invalid, and in this case, the access network device may delete the first data.

By means of the present method, the access network device may obtain that the first data is invalid on the basis of the latest moment at which the first data is transmitted to the terminal device, and may timely delete the first data when the first data is invalid, thereby saving storage resources.

It should be noted that in some other embodiments, when the validity time information of the first data is used to indicate not only the validity time duration for which the first data is transmitted to the terminal device, but also to indicate the latest moment at which the first data is transmitted to the terminal device, the access network device may select one of the two as the validity time information of the first data. Alternatively, the access network device may select the later one in the validity time duration and the latest moment as a new latest moment, and take the new latest moment as the validity time information of the first data. Alternatively, the access network device may select the earlier one in the validity time duration and the latest moment as a new latest moment, and take the new latest moment as the validity time information of the first data. Alternatively, the access network device may select either the validity time duration or the latest moment as a new latest moment, and take the new latest moment as the validity time information of the first data. Alternatively, the access network device may re-determine the validity time information of the first data by other manners, which is not limited by the embodiment of the present application.

In some embodiments, when the first paging message includes the first identification information, the access network device may include the first identification information in the second paging message when transmitting the second paging message to the terminal device.

That is, the second paging message may include the first identification information, the first identification information is associated with the first data, and the first identification information is carried in the first paging message.

By means of the present method, the terminal device, after receiving the second paging message, may obtain the first identification information, so as to acknowledge whether to receive the first data on the basis of whether the first identification information matches the second identification information. Further, the inclusion of the first identification information in the second paging message helps the terminal device determine whether to respond to the second paging message, thereby preventing the terminal device from repeatedly receiving the same first data, and avoiding waste of radio resources.

The second identification information is associated with second data, and the second data is one of data that has been received and/or cached by the terminal device.

Exemplarily, when the first identification information does not match the second identification information, the terminal device may acknowledge that the first data is to be received.

Exemplarily, when the first identification information does not match the second identification information, the terminal device may not acknowledge that the first data is not to be received.

Exemplarily, when the first identification information matches the second identification information, the terminal device may acknowledge that the first data is not to be received.

Further, in some embodiments, when the first identification information does not match the second identification information, the terminal device may transmit the first information to the access network device.

When the first identification information matches the second identification information, the terminal device may transmit second information to the access network device.

When the first identification information matches the second identification information, the terminal device ignores the second paging message.

It should be noted that when the first identification information does not match the second identification information, the terminal device may record the first identification information.

In some embodiments, the first identification information includes identification information of the first data and/or a value tag of the first data.

Exemplarily, the identification information of the first data may uniquely identify the first data. For example, it may identify the first data within a registered PLMN range; or, identify the first data within a registered area.

Exemplarily, the value tag of the first data may be obtained by several bits (e.g., four bits). For a terminal device, an initial value of the value tag may be set to zero. Each time the core network element transmits new data (e.g., the first data is the new data, and the core network element transmits the first data to the terminal device) to the terminal device via the access network device, the value tag is automatically increased by 1. The value tag is allowed to wrap around.

Exemplarily, the value tag being allowed to wrap around may be understood as follows. Assuming that the maximum value of the value tag is 10, once a count value of the value tag reaches the maximum value of 10, it resets to the initial value of 0, and a new round of automatic updating begins.

It should be noted that the mismatch between the first identification information and the second identification information may be a mismatch between the identification information of the first data and identification information of the second data, or a mismatch between the value tag of the first data and a value tag of the second data, or it may refer to the identification information of the first data mismatching the identification information of the second data and t the value tag of the first data mismatching the value tag of the second data, which is not limited by the embodiment of the present application.

By means of the present method, on one hand, when the first identification information does not match the second identification information, the terminal device may transmit the first information to the access network device, enabling that the access network device can learn that the terminal device has acknowledged that the first data is to be received or the terminal device has not acknowledged that first data is not to be received, so that the access network device may timely transmit the cached first data to the terminal device, thereby shortening the transmission waiting latency. On the other hand, when the first identification information matches the second identification information, the terminal device may transmit the second information to the access network device, so that the access network device can learn that the terminal device does not need to receive the first data, and the access network device may not transmit the first data to the terminal device, thereby preventing the waste of radio resources. On yet another hand, when the first identification information matches the second identification information, the terminal device may ignore the second paging message, and thus not send a response message for the second paging message to the access network device, thereby preventing the waste of radio resources.

In some embodiments, the method may further include that: the access network device transmits third information to the core network element, the third information being used to indicate a transmission result for the transmission of the first data to the terminal device.

Correspondingly, the core network element may receive the third information from the access network device.

Exemplarily, the MME/AMF may receive the third information from the access network device.

It is to be noted that the transmission result may indicate that the first data has been transmitted to the terminal device; or, the transmission result may indicate that the first data has not been transmitted to the terminal device.

It is to be further noted that in some embodiments, the access network device transmitting the third information to the core network element may include that: the access network device disconnects a service link between the access network device and the terminal device, and reconnects a service link between the access network device and the core network element, so that the third information can be transmitted by the access network device to the core network element via the feeder link.

By means of the present method, the core network element can learn whether the first data has been transmitted to the terminal device. When the core network element learns that the first data has been transmitted to the terminal device, if the core network element has cached the first data, the core network element may choose to delete the first data; and the core network element, when learning that the first data has not been transmitted to the terminal device, may receive the first data from the access network device.

Regarding whether the first data has been transmitted to the terminal device, there may be the following two possible implementations for the access network device.

In the first possible implementation, when the first data is not transmitted to the terminal device, the access network device transmits the first data to the core network element.

Correspondingly, the core network element may receive the first data from the access network device.

Exemplarily, the S-GW/UPF may receive the first data from the access network device.

By means of the present method, when the first data is not transmitted to the terminal device, if the core network element does not cache the first data, the core network element may receive the first data from the access network device, so that subsequently the first data can be transmitted to the terminal device again.

In the second possible implementation, when the transmission result indicates that the first data has been transmitted to the terminal device and the core network element has cached the first data, the core network element may delete the first data.

Exemplarily, the MME/AMF may delete the first data.

By means of the present method, when the transmission result indicates that the first data has been transmitted to the terminal device, the core network element may timely delete the cached first data, thereby saving the storage resources.

In some embodiments, there may be one or more access network devices.

By means of the present method, on one hand, when there is one access network device, the core network element synchronously transmits the first paging message and the first data to the one access network device, thereby saving transmission resource. On the other hand, when there is a plurality of access network devices, the core network element synchronously transmits the first paging message and the first data to each of the plurality of access network devices respectively, thereby helping to increase the success rate of paging the terminal device and/or transmitting data to the terminal device.

The communication method provided in the foregoing embodiment will be described in detail below with reference to specific application scenarios.

It should be noted that the access network device in the foregoing embodiment may be a satellite. The terminal device may be a UE.

In the related art, for the case of MT-data triggering, the MME/AMF first transmits a Paging message to a satellite in a paging area; the satellite forwards the Paging message; the UE, after receiving the Paging message, transmits an uplink RRC message (e.g., an RRC connection establishment request message, an RRC connection resume request message, or an Early Data request message) to the satellite; the satellite, after receiving the paging message, notifies the MME/AMF; then the MT-data is transmitted to the satellite by the S-GW/UPF; and the satellite delivers the MT-data to the UE. For a satellite system operating in a store-and-forward operating mode, since the Service Link and the Feeder Link cannot be simultaneously connected, if the core network still transmits the MT-data to the satellite after receiving the Paging response, since the satellite to which the UE transmits the Paging response does not have the MT-data to be received by the UE, the UE must wait until the satellite flies near a terrestrial core network and establishes a feeder link connection with the terrestrial core network before it requests the MT-data from the core network. Once the satellite obtains the MT-data, the Service Link between the satellite and the UE is disconnected again, and the satellite must fly to the airspace above the UE to page the UE and then transmit the MT-data to the UE. Additionally, the satellite further transmits its stored M0 data to the core network. The above procedure results in long latency. Therefore, it is necessary to optimize the MT-data transmission procedure for the store-and-forward satellite operating mode to shorten the transmission waiting latency.

The embodiment of the present application mainly relates to a method for transmitting MT-data in the store-and-forward satellite operating mode in an NTN. In the embodiment of the present application, the core network element may synchronously transmit a first Paging message (i.e., first paging message) and MT-data (i.e., first data) to the satellite when the feeder link is connected. The satellite may transmit a second Paging message (i.e., second paging message) and MT-data to UE on the basis of the location assistance information of the UE. The satellite feeds back a transmission result for the MT-data to the core network element. The specific implementation process is as follows.

Firstly, the MT-data reaches the core network, and the core network element may synchronously transmit the first Paging message and the MT-data to the satellite when the feeder link is connected.

In some embodiments, the first Paging message carries location assistance information of the UE, and the location assistance information of the UE may be at least one of the following: cell identification (ID) information of a cell where the UE performs last data transmission, location information of the UE, or tracking area information where the UE is registered.

In some embodiments, the first Paging message carries validity time information of the MT-data, which is used to indicate that the MT-data needs to be transmitted to the UE within a validity time duration.

Whether to reserve the MT-data by the core network is achieved by the following two manners.
(1) Core network caching manner 1: the core network (S-GW/UPF) does not cache the MT-data after delivering it to the satellite;
(2) Core network caching manner 2: the core network (S-GW/UPF) caches a copy of the MT-data after delivering it to the satellite.

Secondly, the satellite transmits the second Paging message on the basis of the location assistance information of the UE (e.g., the satellite flies to the airspace above the UE, or flies to an area identified by a cell ID, or flies to the UE's registered tracking area) provided by the core network. The UE, after receiving the second Paging message, transmits a response message for the second Paging message (i.e., first information) to the satellite, and the satellite, after receiving the response message for the second Paging message, transmits the cached MT-data to the UE. The satellite may transmit the MT-data to the UE by the following manners.
(1) The UE enters a connected state, and the satellite transmits the MT-data to the UE via DRB; and
(2) The UE does not enter the connected state, and the satellite transmits the MT-data to the UE through MT-EDT or MT-SDT manner.

Then, when the feeder link between the satellite and the core network is reconnected, the satellite reports a transmission result of the MT-data to the core network.

For the core network caching manner 1, if the satellite fails to complete the transmission of the MT-data to the UE, the satellite reports MT-data transmission failure indication information to the core network (MME/AMF), and/or the satellite transmits the cached MT-data back to the core network (S-GW/UPF).

For the core network caching manner 2, if the satellite successfully completes the transmission of the MT-data to the UE, the satellite reports MT-data transmission success indication information to the core network (MME/AMF), and the core network (MME/AMF) may delete the cached MT-data.

Finally, when the Paging message carries the validity time information of the MT-data, if the satellite determines that the cached MT-data is invalid (e.g., the validity time is exceeded), the satellite may clear its cached MT-data.

According to the communication method provided by the embodiment of the present application, a core network sends a first Paging message and MT-data to a single satellite, which helps to save transmission resources; and the satellite reports a transmission result of the MT-data to the core network, which is helpful for the core network to timely clear the cached MT-data, thereby saving storage resources.

In the embodiment of the present application, the core network element may synchronously transmit the first Paging message and the MT-data to the satellite when the feeder link is connected; and the satellite may transmit the second Paging message and the MT-data to the UE on the basis of the location assistance information of the UE, where the second Paging message may include related information of MT-data to be transmitted; and once the MT-data has been correctly received, the UE ignores the paging message including the same MT-data (i.e., second paging message). The specific implementation procedure is as follows.

Firstly, the MT-data reaches the core network, and the core network element may synchronously transmit the first Paging message and the MT-data to the satellite when the feeder link is connected.

In some embodiments, the first Paging message carries the location assistance information of the UE, and the location assistance information of the UE may be at least one of the following: cell ID information of a cell where the UE performs last data transmission, location information of the UE, or tracking area information where the UE is registered.

In some embodiments, the first Paging message carries validity time information of the MT-data, which is used to indicate that the MT-data needs to be transmitted to the UE within a validity time duration.

In some embodiments, the first Paging message carries first identification information, and the first identification information is associated with the MT-data. The first identification information may include at least one of the following:
ID of the MT-data, where the ID may uniquely identify the MT-data, for example, within a registered PLMN range or within a registered area; and
a value tag consisting of several bits (e.g., 4 bits). For a certain UE, the initial value of the value tag is set to zero. Each time the core network transmits new MT-data, the value tag is automatically increased by 1. The value tag is allowed to wrap around.

Secondly, the satellite transmits the second Paging message on the basis of the location assistance information of the UE (e.g., the satellite flies to the airspace above the UE, or flies to an area identified by a cell ID, or flies to a tracking area where the UE is registered) provided by the core network.

In some embodiments, the second Paging message carries the first identification information.

Then, the UE, after receiving the second Paging message, checks the first identification information carried in the second Paging message. For the first identification information, the UE may perform the following processing (1) and (2).
(1) If the UE determines that it has correctly received the MT-data (e.g., the ID of the MT-data in the second Paging message matches the ID of the MT-data that was correctly received last time; and/or, the value tag in the second Paging message matches the value tag of the MT-data that was correctly received last time), the UE may perform one of the following operations:
   (i) Ignoring the second Paging message, for example, not transmitting the response message for the second Paging message, that is, not transmitting any uplink message (e.g., an RRC connection establishment request message, an RRC connection resume request message, or an Early Data request message); or,
   (ii) Transmitting the response message for the second Paging message (i.e., second information), and indicating to the satellite that the UE has correctly received and/or cached the MT-data, so that the satellite can clear its cached MT-data.
(2) If the UE determines that the UE has not correctly received the MT-data (e.g., the ID of the MT-data in the second Paging message does not match the ID of the MT-data that was correctly received last time, and/or the value tag in the second Paging message does not match the value tag of the MT-data that was correctly received last time), the UE transmits the response message for the second Paging message (i.e., first information) to the satellite, and the satellite, after receiving the response message for the second Paging message, transmits the cached MT-data to the UE. The UE records the first identification information that was last correctly received.

Finally, if the first Paging message carries the validity time information of the MT-data, and the satellite determines that the cached MT-data is invalid (e.g., the validity time duration is exceeded), the satellite may clear the MT-data cached therein.

According to the communication method provided by the embodiment of the present application, a core network transmits a first Paging message and MT-data to a plurality of satellites, which helps increase the success rate of paging and MT-data transmission. The first identification information is included in the first Paging message, which helps the UE determine whether the second Paging message needs to be responded, thereby preventing repeatedly receiving the same MT-data and avoiding the waste of radio resources.

Preferred embodiments of the present application are described in detail above with reference to the drawings, but the present application is not limited to specific details in the above-described embodiments. Within the scope of the technical concept of the present application, several simple variations may be made to the technical solution of the present application, and these simple variations all fall within the scope of protection of the present application. For example, various specific technical features described in the above specific implementations may be combined in any suitable manner without contradictions. To prevent unnecessary repetition, the present application no longer describes the various possible combinations. In another example, any combination of different implementations of the present application may also be made, as long as the same does not violate the idea of the present application, which should likewise be considered as the content disclosed in the present application. For another example, under the premise of no conflicts, the various embodiments described in the present application and/or the technical features in the various embodiments may be arbitrarily combined with the prior art, and the technical solutions obtained after the combination should also fall within the scope of protection of the present application.

It should be understood that in various method embodiments of the present application, the magnitude of the sequence numbers of the various processes described above does not imply the order of execution, and the order of execution of the various processes should be determined by functions and internal logic thereof, and should not constitute any limitation on the implementation process of the embodiments of the present application.

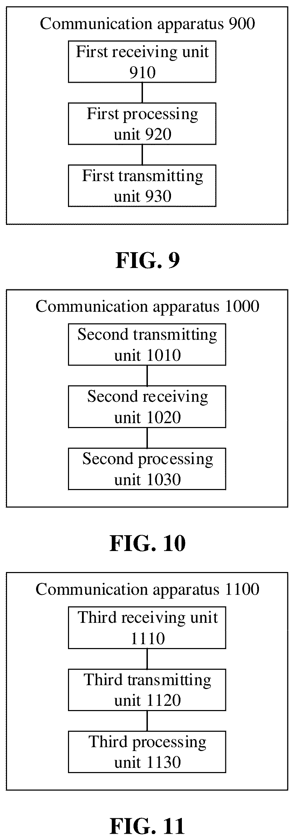

On the basis of the same inventive concept as the foregoing embodiments, FIG. 9 shows a schematic structural diagram of the composition of a communication apparatus provided in an embodiment of the present application, which is applied to an access network device. As shown in FIG. 9, the communication apparatus 900 may include a first receiving unit 910.

The first receiving unit 910 is configured to synchronously receive a first paging message and first data from a core network element, the first paging message being used to page a terminal device that is to receive the first data.

A time interval between a time domain in which the apparatus receives the first paging message and a time domain in which the apparatus receives the first data is less than a first threshold.

In some embodiments, the communication apparatus 900 is used to cache the first data, and the communication apparatus 900 is used to forward the first data to the terminal device.

In some embodiments, as shown in FIG. 9, the communication apparatus 900 may further include a first processing unit 920 and a first transmitting unit 930.

The first processing unit 920 is configured to cache the first data.

The first transmitting unit 930 is configured to transmit a second paging message to the terminal device, the second paging message being used to page, within the network coverage of the communication apparatus 900, the terminal device that is to receive the first data.

In some embodiments, the first receiving unit 910 is further configured to receive first information from the terminal device; the first information indicating that the terminal device has acknowledged that the first data is to be received or has not acknowledged that the first data is not to be received. The first transmitting unit 930 is further configured to transmit the first data to the terminal device.

In some embodiments, the first receiving unit 910 is further configured to receive second information from the terminal device, the second information indicating that the terminal device has acknowledged that the first data is not to be received. The second information carries indication information that is used to indicate that the terminal device has received and/or cached the first data.

In some embodiments, the first processing unit 920 is further configured to delete the first data in response to the second information.

In some embodiments, the first paging message includes at least one of the following:
location assistance information of the terminal device;
validity time information of the first data; and
first identification information associated with the first data.

In some embodiments, the location assistance information of the terminal device includes at least one of the following:
cell identification information of a cell(s) where the terminal device performs N previous transmissions of data and/or signaling, N being a positive integer;
location information of the terminal device; and
tracking area information of the terminal device.

In some embodiments, the validity time information of the first data is used to indicate a validity time duration where the first data is transmitted to the terminal device; and/or
the validity time information of the first data is used to indicate the latest moment at which the first data is transmitted to the terminal device.

In some embodiments, the first identification information includes identification information of the first data and/or a value tag of the first data.

In some embodiments, the second paging message is transmitted by the communication apparatus 900 on the basis of the location assistance information of the terminal device, and the location assistance information of the terminal device is carried in the first paging message.

In some embodiments, the second paging message includes first identification information, the first identification information is associated with the first data, and the first identification information is carried in the first paging message.

In some embodiments, the first transmitting unit 930 is further configured to transmit third information to the core network element, the third information being used to indicate a transmission result for transmission of the first data to the terminal device.

In some embodiments, the first transmitting unit 930 is further configured to transmit the first data to the core network element when the first data is not transmitted to the terminal device.

In some embodiments, the first processing unit 920 is further configured to determine whether the first data is valid on the basis of the validity time information of the first data, the validity time information of the first data being carried in the first paging message; and to delete the first data when the first data is invalid.

According to the communication apparatus provided in an embodiment of the present application, an access network device (e.g., a satellite) synchronously receives a first paging message and first data from a core network element, the first paging message being used to page a terminal device that is to receive the first data, where a time interval between a time domain in which the access network device receives the first paging message and a time domain in which the access network device receives the first data is less than a first threshold. In this way, the access network device may synchronously receive the first paging message and the first data from the core network element, such that subsequently, after learning that the terminal device has acknowledged that the first data is to be received or has not acknowledged that the first data is not to be received, the access network device can timely transmit the first data to the terminal device, thereby shortening the transmission waiting latency.

It should be understood by a person skilled in the art that the relevant description of the described communication apparatus in the embodiments of the present application may be understood with reference to the relevant description of the communication method in the embodiments of the present application.

On the basis of the same inventive concept as the foregoing embodiments, FIG. 10 shows a schematic structural diagram of the composition of another communication apparatus provided in an embodiment of the present application, which is applied to a core network element. As shown in FIG. 10, the communication apparatus 1000 may include a second transmitting unit 1010.

The second transmitting unit 1010 is configured to synchronously transmit a first paging message and first data to an access network device, the first paging message being used to page a terminal device that is to receive the first data.

A time interval between a time domain in which the apparatus transmits the first paging message and a time domain in which the apparatus transmits the first data is less than a second threshold.

In some embodiments, the first paging message includes at least one of the following:
location assistance information of the terminal device;
validity time information of the first data; or
first identification information associated with the first data.

In some embodiments, the location assistance information of the terminal device includes at least one of the following:
cell identification information of a cell where the terminal device performs N previous transmissions of data and/or signaling, N being a positive integer;
location information of the terminal device; or
tracking area information of the terminal device.

In some embodiments, the validity time information of the first data is used to indicate a validity time duration for which the first data is transmitted to the terminal device; and/or
the validity time information of the first data is used to indicate the latest moment at which the first data is transmitted to the terminal device.

In some embodiments, the first identification information includes identification information of the first data and/or a value tag of the first data.

In some embodiments, as shown in FIG. 10, the communication apparatus 1000 may further include a second receiving unit 1020.

The second receiving unit 1020 is configured to receive third information from the access network device, the third information being used to indicate a transmission result for transmission of the first data to the terminal device.

In some embodiments, as shown in FIG. 10, the communication apparatus 1000 may further include a second processing unit 1030.

The second processing unit 1030 is configured to delete the first data when the transmission result indicates that the first data has been transmitted to the terminal device and the communication apparatus 1000 has cached the first data.

In some embodiments, the second receiving unit 1020 is further configured to receive the first data from the access network device when the first data is not transmitted to the terminal device.

In some embodiments, the number of the access network devices is one or more.

According to the communication apparatus provided in the embodiment of the present application, a core network element synchronously transmits a first paging message and first data to an access network device, the first paging message being used to page a terminal device that is to receive the first data, where a time interval between a time domain in which the apparatus transmits the first paging message and a time domain in which the apparatus transmits the first data is less than the second threshold. In this way, the core network element may synchronously transmit the first paging message and the first data to the access network device, such that subsequently, after learning that the terminal device has acknowledged that the first data is to be received or has not acknowledged that the first data is not to be received, the access network device can timely transmit the first data to the terminal device, thereby shortening the transmission waiting latency.

It should be understood by a person skilled in the art that the relevant description of the described communication apparatus in the embodiments of the present application may be understood with reference to the relevant description of the communication method in the embodiments of the present application.

On the basis of the same inventive concept as the foregoing embodiments, FIG. 11 shows a schematic structural diagram of the composition of yet another communication apparatus provided in an embodiment of the present application, which is applied to a terminal device. As shown in FIG. 11, the communication apparatus 1100 may include a third receiving unit 1110 and a third transmitting unit 1120.

The third receiving unit 1110 is configured to receive a second paging message from an access network device, the second paging message being used to page, within the network coverage of the access network device, the communication apparatus 1100 that is to receive first data, where the access network device has cached the first data.

The third transmitting unit 1120 is configured to transmit first information to the access network device when the communication apparatus 1100 has acknowledged that the first data is to be received or has not acknowledged that the first data is not to be received. The first information indicates that the communication apparatus 1100 has acknowledged that the first data is to be received or has not acknowledged that the first data is not to be received; and

The third receiving unit 1110 is further configured to receive the first data from the access network device.

In some embodiments, the third transmitting unit 1120 is further configured to transmit second information to the access network device when the communication apparatus 1100 has acknowledged that the first data is not to be received, where the second information indicates that the communication apparatus 1100 has acknowledged that the first data is not to be received. The second information carries indication information used to indicate that the communication apparatus 1100 has received and/or cached the first data.

In some embodiments, as shown in FIG. 11, the communication apparatus 1100 may further include a third processing unit 1130.

The third processing unit 1130 is configured to ignore the second paging message when the communication apparatus 1100 has acknowledged that the first data is not to be received.

In some embodiments, the second paging message includes first identification information that is associated with the first data.

In some embodiments, the first identification information includes identification information of the first data and/or a value tag of the first data.

In some embodiments, the third transmitting unit 1120 is further configured to transmit the first information to the access network device when the first identification information does not match the second identification information; or, the third transmitting unit 1120 is further configured to transmit the second information to the access network device when the first identification information matches the second identification information; or, the third processing unit 1130 is further configured to ignore the second paging message when the first identification information matches the second identification information. The second identification information is associated with second data, and the second data is one of data that has been received and/or cached by the communication apparatus 1100.

In some embodiments, the number of the access network devices is one or more.

According to the communication apparatus provided in the embodiment of the present application, a terminal device receives a second paging message from an access network device, the second paging message being used to page, within the network coverage of the access network device, the terminal device that is to receive the first data, where the access network device caches the first data; in a case where the terminal device acknowledges that the first data is to be received or has not acknowledge that the first data is not to be received, the terminal device transmits first information to the access network device, the first information indicating that the terminal device has acknowledged that the first data is to be received or has not acknowledged that the first data is not to be received; and the terminal device receives the first data from the access network device. In this way, after the terminal device receives the second paging message, when the terminal device acknowledges that the first data is to be received or has not acknowledged that the first data is not to be received, the terminal device may transmit the first information to the access network device, so that the access network device can transmit the cached first data to the terminal device, and thus the terminal device can timely receive the first data, thereby shortening the transmission waiting latency.

It should be understood by a person skilled in the art that the relevant description of the described communication apparatus in the embodiments of the present application may be understood with reference to the relevant description of the communication method in the embodiments of the present application.

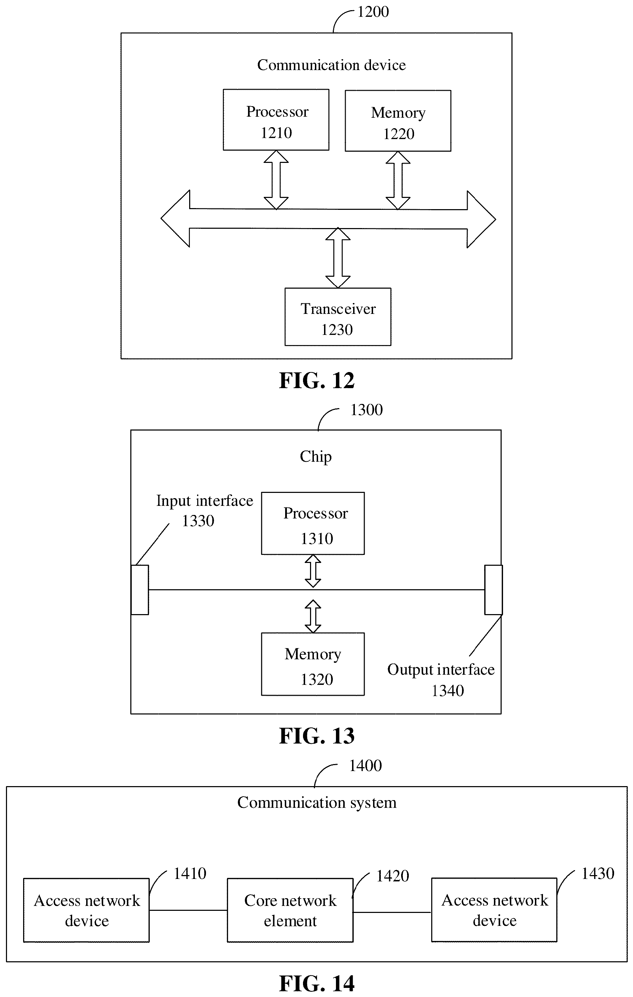

FIG. 12 is a schematic structural diagram of a communication device 1200 provided in an embodiment of the present application. As shown in FIG. 12, the communication device 1200 includes a processor 1210 and a memory 1220. The memory 1220 may store a computer program, and the processor 1210 may invoke and run the computer program from the memory 1220 to implement the methods in the embodiments of the present application.

The memory 1220 may be a separate component independent of the processor 1210, or may be integrated into the processor 1210.

In some embodiments, as shown in FIG. 12, the communication device 1200 may further include a transceiver 1230. The processor 1210 may control the transceiver 1230 to perform communication with other devices. Specifically, the transceiver may transmit information or data to other devices, or receive information or data transmitted by other devices.

The transceiver 1230 may include a transmitter and a receiver. The transceiver 1230 may further include an antenna, and the number of antennas may be one or more.

In some embodiments, an embodiment of the present application further provides compositions of another communication device, which may include the communication apparatus 900, the communication apparatus 1000, or the communication apparatus 1100 in any one of the foregoing embodiments.

In some embodiments, the communication device may be the access network device in the embodiments of the present application, and the processor 1210 may invoke and run the computer program from the memory 1220 to implement the method implemented by the access network device in the embodiments of the present application. For conciseness, further details are omitted here.

In some embodiments, the communication device may be the core network element in the embodiments of the present application, and the processor 1210 may invoke and run the computer program from the memory 1220 to implement the method implemented by the core network element in the embodiments of the present application. For conciseness, further details are omitted here.

In some embodiments, the communication device may be the terminal device in the embodiments of the present application, and the processor 1210 may invoke and run the computer program from the memory 1220 to implement the method implemented by the terminal device in the embodiments of the present application. For conciseness, further details are omitted here.

FIG. 13 is a schematic structural diagram of a chip provided in an embodiment of the present application. As shown in FIG. 13, the chip 1300 includes a processor 1310. The processor 1310 may invoke and run a computer program from a memory to implement the methods in the embodiments of the present application.

In some embodiments, as shown in FIG. 13, the chip 1300 may further include a memory 1320. The processor 1310 may invoke and run a computer program from the memory 1320 to implement the methods in the embodiments of the present application.

The memory 1320 may be one separate component independent of the processor 1310, or may be integrated into the processor 1310.

In some embodiments, the chip 1300 may further include an input interface 1330. The processor 1310 may control the input interface 1330 to perform communication with other devices or chips. Specifically, the input interface may obtain information or data transmitted by other devices or chips.

In some embodiments, the chip 1300 may further include an output interface 1340. The processor 1310 may control the output interface 1340 to perform communication with other devices or chips. Specifically, the output interface may output information or data to other devices or chips.

In some embodiments, the chip may be applied to the access network device in the embodiments of the present application. For conciseness, further details are omitted here.

In some embodiments, the chip may be applied to the core network element in the embodiments of the present application. For conciseness, further details are omitted here.

In some embodiments, the chip may be applied to the terminal device in the embodiments of the present application. For conciseness, further details are omitted here.

It should be understood that the chip mentioned in the embodiment of the present application may also be referred to as a system-level chip, a system chip, a chip system, or a system-on-chip chip, or the like.

FIG. 14 is a schematic block diagram of a communication system 1400 provided in an embodiment of the present application. As shown in FIG. 14, the communication system 1400 may include an access network device 1410, a core network element 1420, and a terminal device 1430.

The access network device 1410 may be used to implement corresponding functions implemented by the access network device in the foregoing methods, the core network element 1420 may be used to implement corresponding functions implemented by the core network element in the foregoing methods, and the terminal device 1430 may be used to implement corresponding functions implemented by the terminal device in the foregoing methods. For conciseness, further details are omitted here.

It can be understood that the processor in the embodiments of the present application may be an integrated circuit chip having signal processing capability. During implementation, various operations in the method embodiments described above may be completed by an integrated logic circuit of hardware in a processor or instructions in the form of software. The described processor may be a general-purpose processor, a Digital Signal Processor (DSP), an Application Specific Integrated Circuit (ASIC), a Field Programmable Gate Array (FPGA) or other programmable logic devices, a discrete gate or transistor logic device, or a discrete hardware component. The various methods, operations, and logical block diagrams disclosed in the embodiments of the present application may be implemented or executed. The general-purpose processor may be a microprocessor or any conventional processor, etc. The operations of the methods disclosed in combination with the embodiments of the present application may be directly executed and completed by a hardware decoding processor, or by a combination of hardware and software modules in the decoding processor. Software modules may be located in a mature storage medium in the art, such as a random access memory, a flash memory, a read-only memory, a programmable read-only memory, an electrically erasable programmable memory, or a register. The storage medium is located in the memory, and the processor reads the information in the memory, and completes the operations of the above methods in combination with its hardware.

It can also be understood that the memory in the embodiments of the present application may be a volatile memory or a non-volatile memory, or may include both volatile and non-volatile memories. The non-volatile memory may be a read-only memory (ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (RAM), which is used as an external cache. By way of example but not limitation, many forms of RAM are available, such as static random access memory (Static RAM, SRAM), dynamic random access memory (Dynamic RAM, DRAM), synchronous dynamic random access memory (Synchronous DRAM, SDRAM), double data rate synchronous dynamic random access memory (Double Data Rate SDRAM, DDR SDRAM), enhanced synchronous dynamic random access memory (Enhanced SDRAM, ESDRAM), synchronous link dynamic random access memory (Synchlink DRAM, SLDRAM), and direct memory bus random access memory (Direct Rambus RAM, DR RAM). It should be noted that the memory described herein is intended to include, but is not limited to, the foregoing and any other suitable type of memory.

It can also be understood that the described memory is illustrative but not restrictive. For example, the memory in the embodiments of the present application may also be a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchronous link dynamic random access memory (synch link DRAM, SLDRAM), a direct memory bus random access memory (Direct Rambus RAM, DR RAM), or the like. That is, the memory in the embodiments of the present application is intended to include, but is not limited to, the foregoing and any other suitable type of memory.

A computer-readable storage medium for storing a computer program is further provided in an embodiment of the present application.

In some embodiments, the computer-readable storage medium may be applied to the access network device in the embodiments of the present application, and the computer program, when executed by at least one processor, implements the corresponding processes implemented by the access network device in the respective methods of the embodiments of the present application, which will not be repeated here for the sake of brevity.

In some embodiments, the computer-readable storage medium may be applied to the core network element in the embodiments of the present application, and the computer program, when executed by at least one processor, implements the corresponding processes implemented by the core network element in the respective methods of the embodiments of the present application, which will not be repeated herein for the sake of brevity.

In some embodiments, the computer-readable storage medium may be applied to the terminal device in the embodiments of the present application, and the computer program, when executed by at least one processor, implements the corresponding processes implemented by the terminal device in the respective methods of the embodiments of the present application, which will not be repeated herein for the sake of brevity.

A computer program product including computer program instructions is further provided in an embodiment of the present application.

In some embodiments, the computer program product may be applied to the access network device in the embodiments of the present application, and the computer program instructions cause a computer to execute the corresponding processes implemented by the access network device in the respective methods of the embodiments of the present application, which will not be repeated here for the sake of brevity.

In some embodiments, the computer program product may be applied to the core network element in the embodiments of the present application, and the computer program instructions cause a computer to execute the corresponding processes implemented by the core network element in the respective methods of the embodiments of the present application, which will not be repeated herein for the sake of brevity.

In some embodiments, the computer program product may be applied to the terminal device in the embodiments of the present application, and the computer program instructions cause a computer to execute the corresponding processes implemented by the terminal device in the respective methods of the embodiments of the present application, which will not be repeated herein for the sake of brevity.

A computer program is further provided in an embodiment of the present application.

In some embodiments, the computer program may be applied to the access network device in the embodiments of the present application, and the computer program, when running on a computer, causes the computer to execute the corresponding processes implemented by the access network device in the respective methods of the embodiments of the present application, which will not be repeated here for the sake of brevity.

In some embodiments, the computer program may be applied to the core network element in the embodiments of the present application, and the computer program, when running on a computer, causes the computer to execute the corresponding processes implemented by the core network element in the respective methods of the embodiments of the present application, which will not be repeated herein for the sake of brevity.

In some embodiments, the computer program may be applied to the terminal device in the embodiments of the present application, and the computer program, when running on a computer, enables the computer to execute the corresponding processes implemented by the terminal device in the respective methods of the embodiments of the present application, which will not be repeated herein for the sake of brevity.

A person skilled in the art may appreciate that the units and algorithm steps of the examples described in combination with the embodiments disclosed in the present application can be implemented by electronic hardware, or a combination of computer software and electronic hardware. Whether these functions are executed in hardware or software depends on the specific applications and design constraints of the technical solutions. A professional skilled person may use different methods for various specific applications to implement the described functions, but these implementations should not be considered as beyond the scope of the present application.

It can be clearly understood by a person skilled in the art that for convenience and brevity of the description, reference may be made to the corresponding processes in the foregoing method embodiments for the specific working process of the apparatuses and units described above, which will not be repeated here.

In several embodiments provided by the present application, it should be understood that the disclosed apparatuses and methods may be implemented by other manners. For example, the apparatus embodiments described above are merely illustrative. For example, the division of the units is only a logical function division. During actual implementation, there may be other division methods. For example, a plurality of units or components may be combined or integrated into another system, or some features may be ignored or not executed. Furthermore, the coupling, direct coupling or communication connections between each other illustrated or discussed may be indirect coupling or communication connection through some interfaces devices or units, and may be in electrical, mechanical, or other forms.

The units described as separate components may or may not be physically separated, and the components displayed as units may or may not be physical units, that is, they may be located in one place, or may be distributed over a plurality of network units. Some or all of the units may be selected according to the actual needs to achieve the objective of the solutions of the present embodiments.

In addition, the functional units in various embodiments of the present application may be integrated into one processing unit, or each unit may exist physically alone, or two or more units may be integrated into one unit.

If the functions described above are implemented in the form of software function units and sold or used as an independent product, they may be stored in a computer-readable storage medium. On the basis of such understanding, the technical solutions according to the disclosure, in essence or the part contributing to the prior art, or part of the technical solution may be embodied in the form of a software product. The computer software product is stored in a storage medium, and includes several instructions such that a computer device (which may be a personal computer, a server, a network device, or the like) executes all or part of the operations of the methods described in the various embodiments of the present application. The foregoing storage medium includes various media capable of storing a program code such as a USB disk, a mobile hard drive disk, a Read-Only Memory (ROM), a Random Access Memory (RAM), a magnetic disk, or an optical disk.

It should be noted that in the present application, the terms "comprising", "including", or any other variations thereof are intended to indicate non-exclusive inclusion, so that processes, methods, articles, or apparatuses including a series of elements not only include those elements, but also include other elements not explicitly listed, or elements inherent to such processes, methods, articles, or apparatuses. In the absence of more limitations, an element defined by the statement "comprising a/an..." does not preclude the presence of additional same elements in a process, method, article, or apparatus that includes the element.

The described sequence numbers of the embodiments of the present application are merely for the purpose of description and do not represent advantages or disadvantages of the embodiments.

The methods disclosed in several method embodiments provided by the present application may be arbitrarily combined without conflict to obtain new method embodiments.

The features disclosed in several product embodiments provided by the present application may be arbitrarily combined without conflict to obtain new product embodiments.

The features disclosed in several method or device embodiments provided by the present application may be arbitrarily combined without conflict to obtain new method embodiments or device embodiments.

The above descriptions are merely implementations of the present application, and the scope of protection of the present application is not limited thereto. Any person skilled in the art can easily think of changes or substitutions within the technical scope disclosed in the present application, which should be covered in the scope of protection of the present application. Therefore, the scope of protection of the present application should be defined by the scope of protection of the claims.

## Claims

1. A communication method, comprising:
synchronously receiving, by an access network device, a first paging message and first data from a core network element, the first paging message being used to page a terminal device that is to receive the first data;
wherein synchronously receiving, by the access network device, the first paging message and the first data from the core network element is implemented by:
a time interval between a time domain in which the access network device receives the first paging message and a time domain in which the access network device receives the first data being less than a first threshold.

2. The method according to claim 1, wherein the access network device is used to cache the first data, and the access network device is used to forward the first data to the terminal device.

3. The method according to claim 1 or 2, further comprising:
caching, by the access network device, the first data; and
transmitting, by the access network device, a second paging message to the terminal device, the second paging message being used to page, within a network coverage of the access network device, the terminal device that is to receive the first data.

4. The method according to claim 3, further comprising:
receiving, by the access network device, first information from the terminal device, the first information indicating that the terminal device has acknowledged that the first data is to be received or has not acknowledged that the first data is not to be received; and
transmitting, by the access network device, the first data to the terminal device.

5. The method according to claim 3, further comprising:
receiving, by the access network device, second information from the terminal device, the second information indicating that the terminal device has acknowledged that the first data is not to be received,
wherein the second information carries indication information for indicating that the terminal device has received and/or cached the first data.

6. The method according to claim 5, further comprising:
deleting, by the access network device, the first data in response to the second information.

7. The method according to any one of claims 1 to 6, wherein the first paging message comprises at least one of the following:
location assistance information of the terminal device;
validity time information of the first data; or
first identification information associated with the first data.

8. The method according to claim 7, wherein the location assistance information of the terminal device comprises at least one of the following:
cell identification information of a cell wherein the terminal device performs a number N of previous data and/or signaling transmissions, N being a positive integer;
location information of the terminal device; or
tracking area information of the terminal device.

9. The method according to claim 7 or 8, wherein the validity time information of the first data is used to indicate a validity time duration for which the first data is transmitted to the terminal device; and/or
the validity time information of the first data is used to indicate a latest moment at which the first data is transmitted to the terminal device.

10. The method according to any one of claims 7 to 9, wherein the first identification information comprises identification information of the first data and/or a value tag of the first data.

11. The method according to any one of claims 3 to 10, wherein the second paging message is transmitted by the access network device based on location assistance information of the terminal device, and the location assistance information of the terminal device is carried in the first paging message.

12. The method according to any one of claims 3 to 11, wherein the second paging message comprises first identification information, the first identification information is associated with the first data, and the first identification information is carried in the first paging message.

13. The method according to any one of claims 4 to 12, further comprising:
transmitting, by the access network device, third information to the core network element, the third information being used to indicate a transmission result for transmission of the first data to the terminal device.

14. The method according to any one of claims 4 to 13, further comprising:
when the first data is not transmitted to the terminal device, transmitting, by the access network device, the first data to the core network element.

15. The method according to any one of claims 3 to 14, further comprising:
determining, by the access network device based on the validity time information of the first data, whether the first data is valid, the validity time information of the first data being carried in the first paging message; and
deleting, by the access network device, the first data when the first data is invalid.

16. A communication method, the method comprising:
synchronously transmitting, by a core network element, a first paging message and first data to an access network device, the first paging message being used to page a terminal device that is to receive the first data;
wherein synchronously transmitting, by the core network element, the first paging message and the first data to the access network device is implemented by:
a time interval between a time domain in which the core network element transmits the first paging message and a time domain in which the core network element transmits the first data being less than a second threshold.

17. The method according to claim 16, wherein the first paging message comprises at least one of the following:
location assistance information of the terminal device;
validity time information of the first data; or
first identification information associated with the first data.

18. The method according to claim 17, wherein the location assistance information of the terminal device comprises at least one of the following:
cell identification information of a cell where the terminal device performs a number N of previous data and/or signaling transmissions, N being a positive integer;
location information of the terminal device; or
tracking area information of the terminal device.

19. The method according to claim 17 or 18, wherein the validity time information of the first data is used to indicate a validity time duration for which the first data is transmitted to the terminal device; and/or
the validity time information of the first data is used to indicate a latest moment at which the first data is transmitted to the terminal device.

20. The method according to any one of claims 17 to 19, wherein the first identification information comprises identification information of the first data and/or a value tag of the first data.

21. The method according to any one of claims 16 to 20, further comprising:
receiving, by the core network element, third information from the access network device, the third information being used to indicate a transmission result for transmission of the first data to the terminal device.

22. The method according to claim 21, further comprising:
when the transmission result indicates that the first data has been transmitted to the terminal device and the core network element has cached the first data, deleting, by the core network element, the first data.

23. The method according to any one of claims 16 to 21, further comprising:
when the first data is not transmitted to the terminal device, receiving, by the core network element, the first data from the access network device.

24. The method according to any one of claims 16 to 23, wherein a number of access network devices is one or more.

25. A communication method, the method comprising:
receiving, by a terminal device, a second paging message from an access network device, the second paging message being used to page, within a network coverage of the access network device, the terminal device that is to receive first data, where the access network device caches the first data;
when the terminal device has acknowledged that the first data is to be received or has not acknowledged that the first data is not to be received, transmitting, by the terminal device, first information to the access network device, the first information indicating that the terminal device has acknowledged that the first data is to be received or has not acknowledged that the first data is not to be received; and
receiving, by the terminal device, the first data from the access network device.

26. The method according to claim 25, further comprising:
when the terminal device has acknowledged that the first data is not to be received, transmitting, by the terminal device, second information to the access network device, the second information indicating that the terminal device has acknowledged that the first data is not to be received,
wherein the second information carries indication information for indicating that the terminal device has received and/or cached the first data.

27. The method according to claim 25, further comprising:
when the terminal device has acknowledged that the first data is not to be received, ignoring, by the terminal device, the second paging message.

28. The method according to any one of claims 25 to 27, wherein the second paging message comprises first identification information, and the first identification information is associated with the first data.

29. The method according to claim 28, wherein the first identification information comprises identification information of the first data and/or a value tag of the first data.

30. The method according to claim 28 or 29, wherein
when the first identification information does not match second identification information, the terminal device transmits the first information to the access network device; or,
when the first identification information matches the second identification information, the terminal device transmits the second information to the access network device; or,
when the first identification information matches the second identification information, the terminal device ignores the second paging message;
wherein the second identification information is associated with second data, and the second data is one of data that has been received and/or cached by the terminal device.

31. The method according to any one of claims 25 to 30, wherein a number of access network devices is one or more.

32. A communication apparatus, the apparatus comprising:
a first receiving unit, configured to synchronously receive a first paging message and first data from a core network element, the first paging message being used to page a terminal device that is to receive the first data,
wherein a time interval between a time domain in which the apparatus receives the first paging message and a time domain in which the apparatus receives the first data is less than a first threshold.

33. A communication apparatus, the apparatus comprising:
a second transmitting unit, configured to synchronously transmit a first paging message and first data to an access network device, the first paging message being used to page a terminal device that is to receive the first data,
wherein a time interval between a time domain in which the apparatus transmits the first paging message and a time domain in which the apparatus transmits the first data is less than a second threshold.

34. A communication apparatus, the apparatus comprising:
a third receiving unit, configured to receive a second paging message from an access network device, the second paging message is used to page, within a network coverage of the access network device, the communication apparatus that is to receive first data, wherein the access network device caches the first data; and
a third transmitting unit, configured to transmit first information to the access network device when the communication apparatus has acknowledged that the first data is to be received or has not acknowledged that the first data is not to be received, the first information indicating that the communication apparatus has acknowledged that the first data is to be received or has not acknowledged that the first data is not to be received,
wherein the third receiving unit is further configured to receive the first data from the access network device.

35. A communication device, comprising: a processor and a memory, wherein the memory is configured to store a computer program, and the processor is configured to invoke and run the computer program stored in the memory to perform the method according to any one of claims 1 to 15; or perform the method according to any one of claims 16 to 24; or perform the method according to any one of claims 25 to 31.

36. A chip, comprising: a processor, configured to invoke and run a computer program from a memory, to enable a device on which the chip is installed to perform the method according to any one of claims 1 to 15; or perform the method according to any one of claims 16 to 24; or perform the method according to any one of claims 25 to 31.

37. A computer-readable storage medium, wherein the computer-readable storage medium stores a computer program that, when executed by at least one processor, implements the method according to any one of claims 1 to 15; or implements the method according to any one of claims 16 to 24; or implements the method according to any one of claims 25 to 31.

38. A computer program product, comprising computer program instructions that cause a computer to perform the method according to any one of claims 1 to 15; or to perform the method according to any one of claims 16 to 24; or to perform the method according to any one of claims 25 to 31.

39. A computer program that causes a computer to perform the method according to any one of claims 1 to 15; or to perform the method according to any one of claims 16 to 24; or to perform the method according to any one of claims 25 to 31.
